Europäisches Patentamt

European Patent Office

Office européen des brevets

(19)

(11) Publication number: **0 240 891**
**A2**

# EUROPEAN PATENT APPLICATION

(21) Application number: **87104672.8**

(51) Int. Cl.⁴: **B60C 23/04 , B60C 29/00**

(22) Date of filing: **30.03.87**

(30) Priority: **08.04.86 IT 5323986 U**

(43) Date of publication of application:
**14.10.87 Bulletin 87/42**

(84) Designated Contracting States:
**DE ES FR GB**

(71) Applicant: **URMET S.p.A. Costruzioni
Elettro-Telefoniche
Via Bologna 188/C
I-10154 Torino(IT)**

(72) Inventor: **Mondardini, Massimo
Via Mazzini 40
I-10100 Torino(IT)**

(74) Representative: **Modiano, Guido et al
MODIANO, JOSIF, PISANTY & STAUB
Modiano & Associati Via Meravigli, 16
I-20123 Milan(IT)**

(54) **Safety device for connecting a tire valve to a pressure detector of onboard maximum and minimum pressure signal relay systems.**

(57) This safety device is arranged between the tire valve of a motor vehicle and the pressure detector of onboard maximum and minimum pressure signal relay systems and allows normal operation of the tire valve in case of breakage or of damage to the connecting tube of the pressure detector or the pressure detector itself. To this end, the safety device comprises a first connecting portion including a ring nut (22) to be screwed onto the tire valve (21) and a second connecting portion (37) having a coupling member (39) for connection to the connecting tube (12) of the pressure detector. The ring nut (22) has a rigid hollow pusher rod (23) engaging the stem portion of the tire valve (21) and a sealing disk (31) accommodated in a chamber (30) of the ring nut and freely movable between two extreme positions for airflow passage and cutoff. The second connecting portion (37) is sealingly coupled to the first connecting portion in a rotatable and axially slidable way and acts on a pusher stem (42) which engages the sealing disk (31) to shift it from the cutoff to an air passage position for setup and/or restoring pneumatic connection between the tire valve and the pressure detector.

Fig. 3

# SAFETY DEVICE FOR CONNECTING A TIRE VALVE TO A PRESSURE DETECTOR OF ONBOARD MAXIMUM AND MINIMUM PRESSURE SIGNAL RELAY SYSTEMS

The present invention relates to a safety device for connecting a tire valve to a pressure detector of onboard maximum and minimum pressure signal relay systems.

Systems are known for relaying or transmitting, on board of motor vehicles, abnormal conditions of the tires -in particular overpressure and underpressure - based on the radio relaying of signals emitted by a pressure detector, which signals, received and discriminated by a radio receiver placed in the cabin of interior compartment of the motor vehicle, activate one or more alarm detectors.

In these known systems, the pressure detector is generally accommodated, together with the radio transmitter, in a container which is sealed and made watertight by a resin treatment, suitable for being stably coupled to the tire rim, generally on the wheel hub to avoid dynamic unbalances. A normal tube, provided with a ring nut coupling, pneumatically connects the detector to the tire valve, transmitting the pressure of the latter to the former. Naturally, for the pneumatic coupling to be effective as to pressure transmission, the tire valve must be disabled, and this is achieved by means of a push rod in the ring nut coupling, suitable for pushing against the stem of the valve to push it into the open position when the ring nut is screwed on to the seat of the usual valve cap, in replacement thereof.

This known arrangement, which is apparently simple, entails the severe disadvantage of the sudden deflation of the tire in case of breakage of the connecting tube or of damage to the detector, due to the permanent disabling of the tire valve caused by the fixed pusher rod of the coupling ring nut.

The present invention is essentially intended to eliminate this disadvantage by providing a safety connection which is suitable for allowing the normal action of the tire valve in case of breakage of, or damage to, the connecting tube and/or the pressure detector.

According to the present invention, this problem is solved by means of the safety device as defined in the appended claims.

The invention will become apparent from the following detailed description and with reference to the accompanying drawings, where:

Fig. 1 is an elevation view of a wheel of a motor vehicle, provided with an alarm signal relay system comprising the safety device according to the present invention;

Fig. 2 is an enlarged scale view of the device seen in the direction of the arrows II-II of Fig. 1;

Fig. 3 is an enlarged scale cross section view taken along the lines III-III of Fig. 2 illustrating the device in the position allowing passage of air; and

Fig. 4 is a partial cross section view, similar to Fig. 3, illustrating the device with the sealing disk in the airflow cut-off position.

In the drawings, the reference numeral 10 indicates the wheel of a motor vehicle, 11 indicates a container comprising the pressure detector and the radio transmitter of the maximum and minimum pressure onboard relay system, 12 indicates the connecting tube for pneumatic connecting the detector to the tire valve 21 and 20 indicates the safety connecting device object of the present invention.

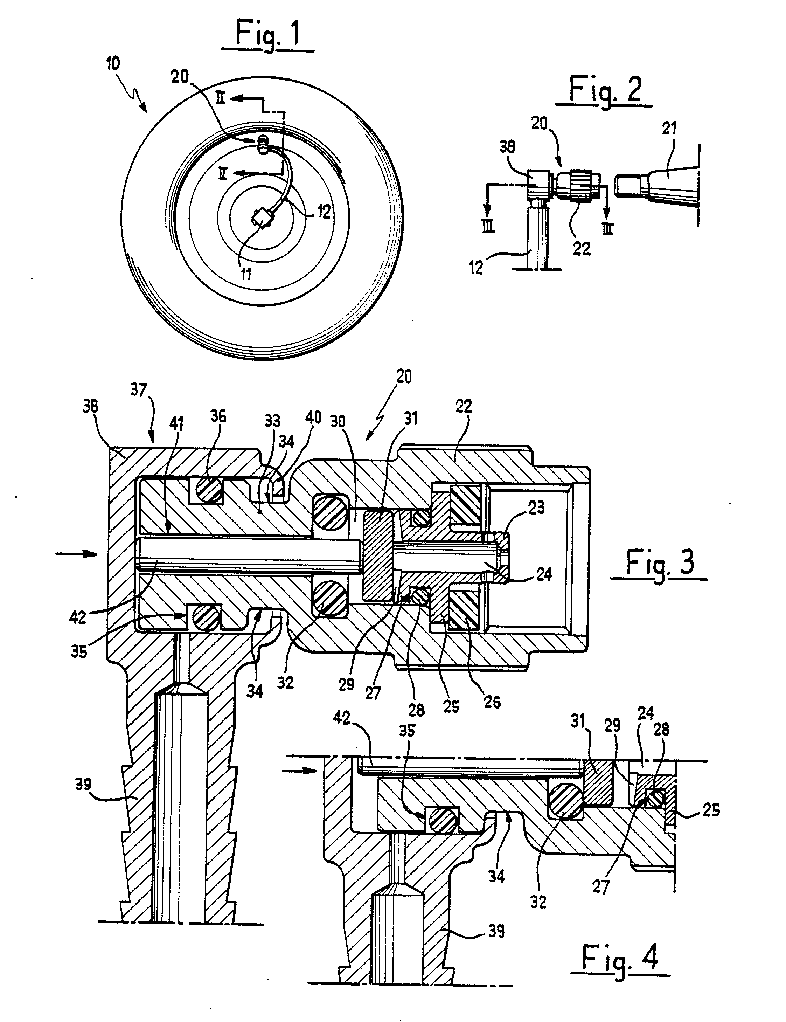

As is clearly illustrated in Figures 2 and 3, the device 20 comprises a first connecting portion composed of a ring nut 22 which can be threadingly coupled to the threaded end of the valve 21 in replacement of the usual closing cap.

The ring nut 22 contains a pusher body having a rigid pusher rod 23 suitable for engaging the stem (not illustrated) of the valve 21 to push it into its open position when the ring 22 is fully screwed onto the same valve. The pusher rod 23 is provided with an air pressure cavity 24 extending also in a wider base 25 of the pusher body, on which a sealing gasket 26 abuts. The base 25 further defines an annular throat 27 accommodating a second OR type sealing gasket 28. Radial channels 29 for the passage of air are provided on the face of the base 25 which is opposite to the pusher rod 23, and communicate with the cavity 24 of the pusher rod. In the ring nut 22, the base 25 defines, on one side, an airtight cylindrical chamber 30, in which a sealing disk 31 of light material, advantageously plastic material, is contained freely movable for separating from each other two parts of the chamber 30.

The disk 31 is movable between two extreme positions, respectively for airflow passage and cutoff and is provided with a diameter which is slightly smaller than the chamber 30, so that an adequate annular port is defined between the wall of the chamber 30 and the disk 31, for the passage of air from the chamber part facing the base 25 to the other chamber part.

The extreme air passage position is defined by the abutment of one side of the disk 31 against the base 25 of the pusher body (Fig. 3). The cutoff position is defined by the abutment of the other side of the disk 31 against an OR type gasket 32 accommodated in an annular seat of the chamber 30 (Fig.4).

As is clearly illustrated in the figure, the ring nut 22 extends into a stem 33 defining a throat 34 and an annular seat 35 for the accommodation of an OR gasket 36. A second connecting portion 37 of the device 20 is fitted onto the stem 33, and comprises a head 38 and a connector 39 for coupling with the small tube 12, the connector being in any way angled with respect to the axis of the ring 22. The head 38 can rotate and axially and sealingly slide on the stem 33 by an amount matching the width of the throat 34, by virtue of the engagement of a stop tab 40, extending within the throat 34, with the shoulder of the latter. A through axial cavity 41 is provided in the stem 33 and accommodates, axially slideable therein, a pusher rod 42, the ends whereof are intended to abut on one side against the inner wall of the head 38, on the other side against the sealing disk 31. The arrangement is thus such that by pressing on the head 38 of the second connecting portion, the disk 31 is caused to move away from the cutoff position, in which the disk 31 abuts against the gasket 32. The diameter of the stem 42 is slightly smaller than the diameter of the axial cavity 41 so that a port for the passage of air is defined between the the stem 42 and the axial cavity 41.

The operation of the device is as follows: By screwing the ring nut 22 on the valve 21, the pusher rod 23 - pushing the stem of the latter - causes compressed air to enter the chamber 30, flowing through the air passage cavity 24 and the channels 29. The compressed air pushes the disk 31 in the cutoff position against the gasket 32, blocking the outflow. In this condition, to allow the air to reach the pressure system detector, it is necessary to press on the head 38 to thereby shift the disk 31 away from the gasket 32 torward or against the base 25 of the pusher body.

By keeping the disk 31 in this position for some time (at least a second), air is allowed to pass into the connector 39, through the port provided between the pusher stem 42 and axial cavity 41.

In these conditions, the pressure in the two parts of the chamber 30, separated by the disk 31, is equalized and the disk remains in a neutral position for any variation of the pressure inside the tire, allowing transmission of pressure variations to the detection device. If conversely a leak occurs in the connecting tube 12 and/or in the detection device, the pressure within the chamber 30 becomes unbalanced and the disk 31 is pushed against the gasket 32 cutting off the airflow caused by said leak.

Naturally, within the inventive concepts, the details may be replaced with technically equivalent elements, while shaped and dimensions, as well as the materials, may vary according to contingent requirements.

## Claims

1. Safety device for connecting a tire valve (21) to a pressure detector of onboard maximum and minimum pressure signal relay systems (11), characterized in that it comprises a first connecting portion (22) having a ring nut (22) to be screwed onto the tire valve (21), with a rigid hollow pusher rod (23) for engging a stem portion of said tire valve (21) and a sealing disk (31) which is freely movable in a chamber (30) of said ring nut (22) between two extreme positions of air flow passage and, respectively, cutt-off; and a second connecting portion (37) including a coupling member (39) for a connecting tube (12), said second connecting portion (37) being sealingly coupled to said first connecting portion in a rotatable and axially slidable way; said second connecting portion being suitable for acting on a pusher stem (42) which engages said sealing disk (31) to shift it from the cut-off position to an air passage position for setup and/or restoring pneumatic connection between said tire valve (21) and said pressure detector.

2. Safety device according to claim 1, characterized in that the extreme air passage positon is defined by the abutment of said sealing disk (31) against the base (25) of said pusher rod (23), said pusher rod being provided with ports (29) which provide the communication between an air passage cavity (24) of said pusher rod (23) and said ring nut chamber (30) accommodating said sealing ring (31).

3. Safety device according to claims 1 and 2, characterized in that the air cut-off position is defined by the abutment of said sealing disk (31) with an OR gasket (32) accommodated at an end of said ring nut chamber (30) opposite to said pusher rod (23).

4. Safety device according to claims 1 to 3, characterized in that said sealing disk (31) is in polymeric material and is provided with a diameter which is slightly smaller than said ring nut chamber (30) to define an annular port for air passage in said chamber (30) from one to the other side of said sealing disk (31).

5. Device according to the preceding claims, characterized in that said first connecting portion extends in a hollow stem (33) on which said second connecting portion (37) is fitted with the interposition of an OR type sealing gasket (36).

6. Device according to claim 5, characterized in that said hollow stem (33) is provided with a throat (34) in which a tab (40) of said second connecting portion (37) engages for limiting axial motion of said second connecting portion.

7. Device according to the preceding claims, characterized in that said pusher stem (42) is accommodated in a cavity (41) of said hollow stem and that the diameter of said pusher stem is smaller than said hollow stem cavity and defines a port for the passage of air from the first to the second connecting portion.

Fig. 1

Fig. 2

Fig. 3

Fig. 4

0 240 891